# EUROPÄISCHE PATENTSCHRIFT

(11) **EP 2 556 250 B1**
(45) Veröffentlichungstag und Bekanntmachung des Hinweises auf die Patenterteilung: **04.11.2015**
(21) Anmeldenummer: 11726665.0
(22) Anmeldetag: 11.04.2011
(51) Int. Cl.: F03D 9/00, F24J 2/07, F03D 1/04

(54) **WIND- UND STRAHLUNGSENERGIE-KOLLEKTOR-ANLAGE**
WIND- AND RADIATION-ENERGY COLLECTOR SYSTEM
INSTALLATION DE COLLECTEURS D'ÉNERGIE ÉOLIENNE ET DE RAYONNEMENT

(30) Priorität: 09.04.2010 DE 102010014300
(43) Veröffentlichungstag der Anmeldung: 13.02.2013
(73) Patentinhaber: Karl Wohllaib GmbH, 88453 Erolzheim (DE)
(72) Erfinder: Wohllaib Karl, 88453 Erolzheim (DE)
(74) Vertreter: Meyer, Thorsten
(86) Internationale Anmeldenummer: PCT/DE2011/000384
(87) Internationale Veröffentlichungsnummer: WO 2011/124217

(56) Entgegenhaltungen:
- WO-A1-00/55549
- DE-U1- 29 918 740
- US-A1- 2006 260 672
- US-A1- 2009 146 434

## Beschreibung

Die Erfindung betrifft einen Wind- und Strahlungsenergie-Kollektor zur Nutzung erneuerbarer Energien je nach optimaler Nutzungssituation.

Die Nachfrage nach Nutzung erneuerbarer Energien wird immer größer. Die Nutzung von Solar- und Windenergie vermittels Kollektoren auf kleineren Gebäuden oder Grundstücken ist jedoch mit den bestehenden Anlagen unzureichend möglich.

Insbesondere fehlt es an Anlagen, die sich auf die wechselnden Bedingungen flexibel einstellen lassen. Eine Ausnutzung der Sonnenenergie und der Windenergie ist wünschenswerter Weise durch schnellen Wechsel innerhalb der Prozessbedingungen in einer Anlage nötig.

Das Dokument DE-U-29918740 offenbart eine Anlage gemäß dem Oberbegriff des Anspruchs 1.

Aufgabe der Erfindung ist es daher einen Wind- und Strahlungsenergie-Kollektor zur Verfügung zu stellen, der die Strahlungsenergie der Sonne als auch die Windenergie in nutzbare Energie umzusetzen vermag.

Diese Aufgabe wird durch einen Wind- und Strahlungsenergie-Kollektor-Anlage nach den Merkmalen des Anspruchs 1 gelöst.

Erfindungsgemäß ist vorgeschlagen, eine Wind- und Strahlungsenergie-Kollektor-Anlage, bei der wenigstens ein Strahlungsenergie-Kollektor mit einem Strahlung absorbierenden Absorber und einem Reflektorkörper vorgesehen ist, welcher Strahlung sammelt und auf den Absorber richtet, so auszugestalten, dass wenigstens ein der Empfangsrichtung des Strahlungsenergie-Kollektors entgegengesetzt angeordnetes an der Anlage gelagertes Windrad vorgesehen ist, wobei die Anordnung aus Strahlungsenergie-Kollektor und Windrad beweglich unterstützt ist, sodass die Anordnung entweder mit dem Strahlungsenergie-Kollektor gegen die Sonne oder mit dem Windrad gegen die vorherrschende Windrichtung ausgerichtet werden kann.

Im Sinne der Erfindung ist auch eine walzenförmig ausgestaltetes und/öder gelagerte Windaufnahmevorrichtung durch Windrad mit umfasst.

Einer der großen Vorteile neben anderen ist es, dass die Ausricht-Mechanik und -Antriebe für beide Energiearten-Kollektoren gemeinsam verwendet werden können und nur noch einmal vorgesehen werden müssen. Zudem ist die Anlage wesentlich kompakter Ausführbar, als herkömmliche Anlagen, die nur nebeneinander aufgestellt werden können.

Eine vorteilhafte Ausgestaltung der Erfindung sieht vor, dass der Absorber des Strahlungsenergie-Kollektors durch ein Fluid durchströmt ist welches die in Wärme umgewandelte absorbierte Strahlung aufnimmt.

Bevorzugterweise wirkt die kinetische Energie des Windrades auf einen Generator.

Eine bevorzugte Ausgestaltung der Erfindung sieht vor, dass der Hohlraum sich zu seinem Ende hin verjüngt und insbesondere im Querschnitt Glocken-, Kegel- oder Kegelstumpf-förmig zuläuft.

Eine besonders vorteilhafte Ausgestaltung der Erfindung sieht vor, dass der Reflektorkörper durch einzeln verschwenk- und/oder verschiebbare Teilflächen gebildet ist, die am Anfangsbereich des Reflektorkörpers angelenkt sind, wodurch die zum Grund des Strahlungsenergie-Kollektors hinweisenden Enden der Teilflächen nach außen geschwenkt und/oder verschoben werden können, wodurch ein Windkanal im Anschluss an das Windrad gebildet wird.

Hierdurch kann ein Durchströmen der Anordnung zur Windausnutzung optimal erfolgen, da der Reflektorkörper zur Strahlungssammlung zu einem röhrförmigen Gebilde nach außen geklappt wird. Hierdurch wird Windausbeute optimiert.

Dem folgend kann nach einer weiteren Weiterbildung vorgesehen sein, dass die Teilflächen des Reflektorkörpers so nach Innen in den Raum des Windkanals geschwenkt werden können, dass der Reflektorkörper einen sich verjüngenden an seiner Oberfläche die Strahlung reflektierenden Hohlraum bildet wobei an dessen sich verengend zulaufendem Grund der Absorber angeordnet ist.

Von Vorteil ist vorgesehen, dass mehrere Anordnungen aus hintereinander angeordneten Windrädern und Kollektoren mit Reflektorkörpern und Absorbern nebeneinander parallel angeordnet sind.

Eine besonders vorteilhafte Ausgestaltung der Erfindung sieht vor, dass zur Unterstützung der Anordnung/en ein Gestell vorgesehen ist an welchem die Anordnung beweglich und insbesondere um die Senkrechte drehbar und um eine horizontale Kippachse verkippbar aufgehängt ist. Hierdurch kann die Anordnung in besonders einfacher Art und Weise auf die hierbei auszunutzende erneuerbare Energieform gerichtet werden, so ist ein perfektes Ausrichten auf die Windrichtung bzw. den Sonnenstand möglich.

Von Vorteil kann wenigstens eine Kupplung vorgesehen sein, vermittels welcher das Windrad vom Generator getrennt werden kann. Hierdurch werden unnötige Reibungsverluste in am derzeitigen Prozess nicht beteiligten Komponenten ausgeschlossen.

Eine vorteilhafte Ausgestaltung der Erfindung sieht vor, dass mehrere lineare Strahlungskollektor und Windrad-Anordnungen parallel angeordnet zusammengefasst sind. Hierdurch können standardisierte und optimierte Einheiten kostengünstig zur jeweiligen Leistungsstufe ausgebaut werden.

Eine weitere Ausgestaltung sieht vor, dass seitlich angelenkte Solarpaneele vorgesehen sind, deren rückwärtige Flächen auch so eingestellt werden können dass diese den Wind auf das/die Windrad/räder lenken.

Weitere vorteilhafte Ausgestaltungen ergeben sich aus den weiteren Unteransprüchen oder deren mögliche Unterkombinationen.

Nachfolgend wird die Erfindung anhand der Zeichnungen weiter erläutert. Im Einzelnen zeigt die schematische Darstellung in:
- Fig. 1: eine schematische Darstellung einer erfindungsgemäßen Anordnung von Wind- und Strahlungsenergie-Kollektor in einer Anlage in Strahlungsenergie-Kollektor Betriebsart, ausgerichtet mit dem Strahlungsenergie-Kollektor gegen die Sonne,
- Fig. 2: eine schematische Darstellung der Wind- und Strahlungsenergie-Kollektor-Anlage aus Fig. 1 mit einem anderen Anstellungswinkel zur Sonne,
- Fig. 3: eine schematische Darstellung der Wind- und Strahlungsenergie-Kollektor-Anlage aus Fig. 2 von der Seite her gesehen,
- Fig. 4: eine schematische Darstellung der Wind- und Strahlungsenergie-Kollektor-Anlage aus Fig. 2 von schräg hinten,
- Fig. 5: eine schematische Darstellung der Wind- und Strahlungsenergie-Kollektor-Anlage aus Fig. 2 von vorne gesehen in den Kollektor,
- Fig. 6: eine schematische Darstellung der Wind- und Strahlungsenergie-Kollektor-Anlage entsprechend den Fig. 1 bis 5, wobei die Solarpaneele angelegt sind,
- Fig. 7: eine schematische Darstellung der Wind- und Strahlungsenergie-Kollektor-Anlage aus Fig. 6 von vorne gesehen in den Kollektor,
- Fig. 8: eine schematische Darstellung der Wind- und Strahlungsenergie-Kollektor-Anlage aus Fig. 6 in der Windenergie-Kollektor Betriebsart mit aus dem Windkanal weggeklappten Reflektor-Teilkörpern, ausgerichtet mit dem Windenergie-Kollektor gegen den Wind,
- Fig. 9: eine schematische Darstellung der Wind- und Strahlungsenergie-Kollektor-Anlage aus Fig. 8 von vorne gesehen in den Windkanal auf die Windräder,
- Fig. 10: eine schematische Darstellung der Wind- und Strahlungsenergie-Kollektor-Anlage aus Fig. 8 von schräg hinten,
- Fig. 11: eine schematische Darstellung der Wind- und Strahlungsenergie-Kollektor-Anlage aus Fig. 8 von der Seite,
- Fig. 12: eine schematische Darstellung der Wind- und Strahlungsenergie-Kollektor-Anlage aus Fig. 8 mit zur Windleitung ausgeklappten Solarpaneelen und Hilfsflächen,
- Fig. 13: eine schematische Darstellung der Wind- und Strählungsenergie-Kollektor-Anlage aus Fig. 12 in einer Schrägansicht,
- Fig. 14: eine schematische Darstellung der Wind- und Strahlungsenergie-Kollektor-Anlage nach Fig. 12 in geöffneter Seitenansicht mit weggeklappten Reflektor-Teilflächen,
- Fig. 15: eine schematische Darstellung der Wind- und Strahlungsenergie-Kollektor-Anlage nach Fig. 2 in geöffneten Seitenansicht mit herein geschwenkten Reflektor-Teilflächen zur Bildung des Reflektorkörpers,
- Fig. 16: eine schematische Darstellung der Wind- und Strahlungsenergie-Kollektor-Anlage mit Windwalzen als Windrädern in einer Ansicht von schräg vorne,
- Fig. 17: eine schematische Darstellung der Wind- und Strahlungsenergie-Kollektor-Anlage aus Fig. 16 in einer Ansicht von schräg hinten,
- Fig. 18: eine schematische Darstellung einer erfindungsgemäßen Wind- und Strahlungsenergie-Kollektor-Anlage integriert in einer um die senkrechte Achse drehbaren Schrägfläche,
- Fig. 19: eine schematische Darstellung der Wind- und Strahlungsenergie-Kollektor-Anlage aus Fig. 18 in einer Ansicht von schräg hinten,
- Fig. 20: eine schematische Darstellung der Wind- und Strahlungsenergie-Kollektor-Anlage aus Fig. 18 in einer Seitenansicht,
- Fig. 21: eine schematische Darstellung der Wind- und Strahlungsenergie-Kollektor-Anlage aus Fig. 18 in einer Ansicht von hinten, und
- Fig. 22: eine schematische Darstellung der Wind- und Strahlungsenergie-Kollektor-Anlage aus Fig. 18 in einer Ansicht von oben.

Die in den Figuren gleichen Bezugsziffern bezeichnen gleiche oder gleich wirkende Elemente.

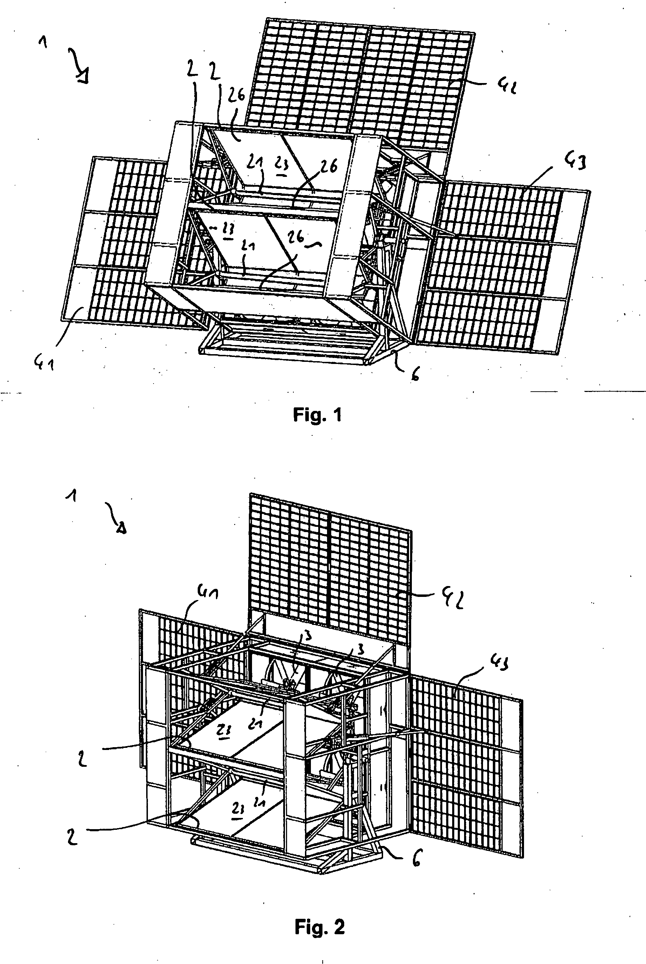

In Fig. 1 ist eine beispielhafte eine schematische Darstellung einer erfindungsgemäßen Anordnung von Wind- und Strahlungsenergie-Kollektor-Anlage 1 gezeigt, die gegen die Sonne ausgerichtet ist. Das in der Fig. nicht zu sehende Windrad 3 ist der Empfangsrichtung des Strahlungsenergie-Kollektors 2 entgegengesetzt angeordnet. Es sind mehrere Anordnungen (2 und 3) aus hintereinander angeordneten Windrädern 3 und Kollektoren 2 mit Reflektorkörpern 22 und Absorbern 21 nebeneinander parallel angeordnet.

Für die Sonnenenergie ist ein Strahlungsenergie-Kollektor 2 mit einem Strahlung absorbierenden Absorber 21 und einem Reflektorkörper 22 vorgesehen, welcher Strahlung sammelt und auf den Absorber 21 richtet.

Der Reflektorkörper 22 bildet einen sich verjüngenden an seiner Oberfläche 23 die Strahlung reflektierenden Hohlraum 24, an dessen sich verengend zulaufendem Grund 25 der Absorber 21 angeordnet ist. Die Strahlung wird optimal auf den Absorber 21 am Grund 25 des Strahlungsenergie-Kollektors 2 gelenkt.

Über ein Leitungssystem wird ein durch den Absorber 21 zirkulierendes Fluid welches die in Wärme umgewandelte absorbierte Strahlung aufnimmt zu einem Wärmetauscher geleitet (nicht dargestellt).

Zudem sind in dem gezeigten Beispiel seitlich angelenkte Solarpaneele 41, 42, 43 ausgeklappt, sodass noch elektrische Energie optimal mit der gegen die Sonne ausgerichteten Anlage 1 gewonnen werden kann.

Die ganze Anordnung ist beweglich unterstützt durch ein Gestell 6 vermittels welchem die Ausrichtung im Beispiel durch Neigung gegen den Sonnenstand/Windrichtung erfolgen kann.

Fig. 2 zeigt die gleiche Anlage in einer leicht geänderten Abstellung, beilspielsweise am Morgen.

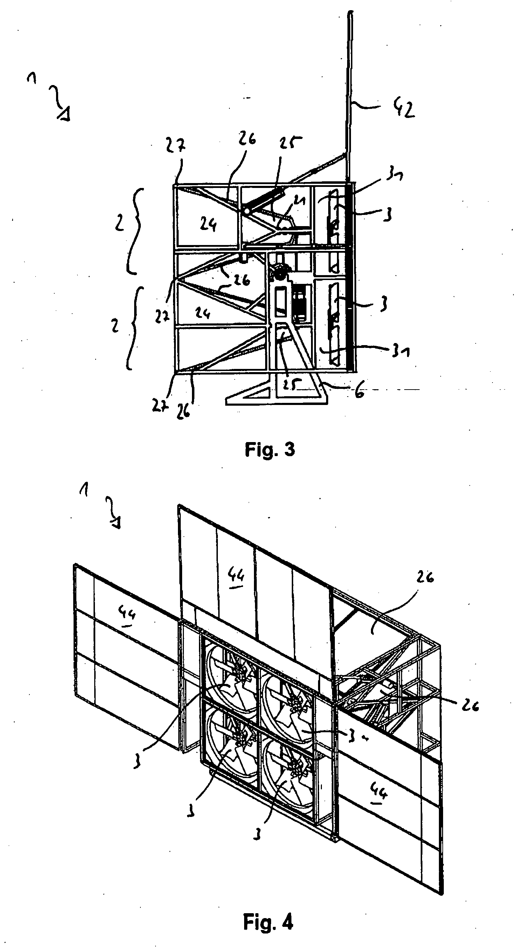

In Fig. 3 ist die Anlage von der Seite gesehen, wobei der sich gegen den Grund 25 verjüngende Reflektorkörper 22 gut ersichtlich ist. In dieser Ansicht ist auch die axiale Anordnung des Strahlungsenergie-Kollektors 2 und des Windrads 3 jeweils bei den parallel angeordneten Anordnungen zu sehen.

So kann je nach Umweltbegebenheiten die Anordnung entweder mit dem Strahlungsenergie-Kollektor 2 gegen die Sonne oder mit dem Windrad 3 gegen die vorherrschende Windrichtung ausgerichtet werden um optimal elektrische Energie liefern zu können.

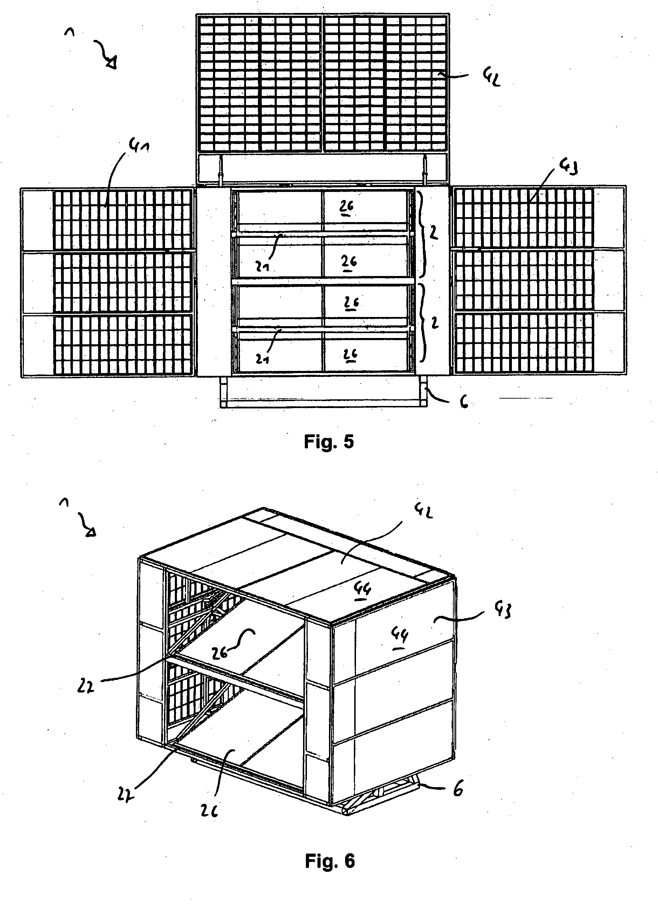

Fig. 4 zeigt wieder Wind- und Strahlungsenergie-Kollektor-Anlage, diesmal von schräg hinten mit Sicht auf die in dieser Betriebsart deaktivierten Windräder 3. In Fig. 5 ist eine Frontalansicht gezeigt.

Bei ungünstigen stärkeren Windverhältnissen ist eine Betriebsart wie in Fig. 6 gezeigt möglich, wobei die Solarpaneele 41, 42 und 43 angelegt sind.

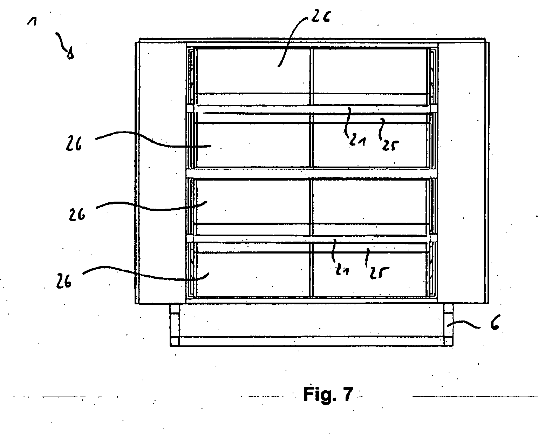

In Fig. 7 ist entsprechend eine Ansicht von vorne in den Kollektor gezeigt.

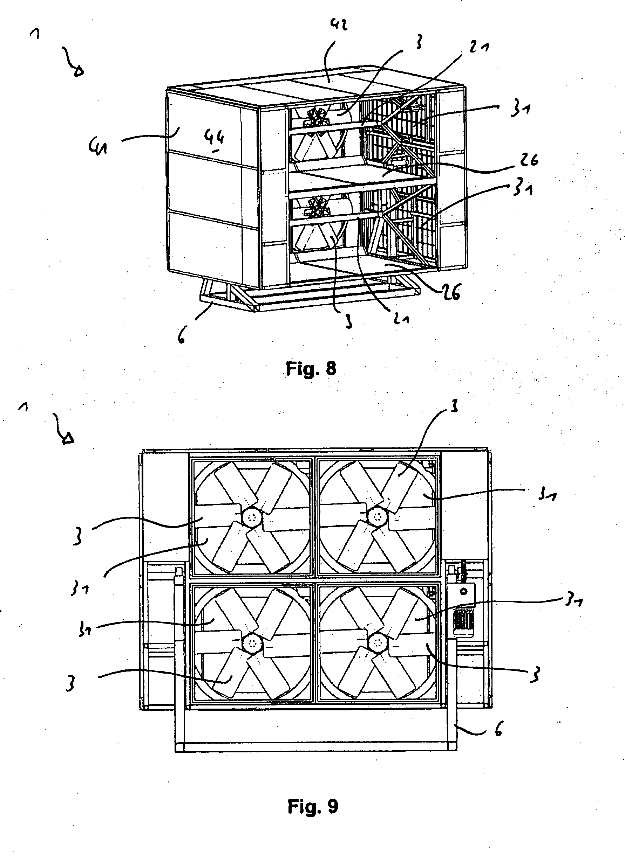

Zur Windnutzung ist die Wind- und Strahlungsenergie-Kollektor-Anlage, wie in Fig. 8 gezeigt, durch Wegklappen der Reflektor-Teilflächen 26 aus dem Windkanal 31 in die Windenergie-Kollektor Betriebsart gebracht worden, um einen optimalen Betrieb des Windrades 3 zu ermöglichen, wobei die nach außen geschwenkten Teilflächen 26 teilweise die Wände des Windkanals bilden. Die Ausrichtung erfolgt nun mit dem Windenergie-Kollektor gegen den Wind.

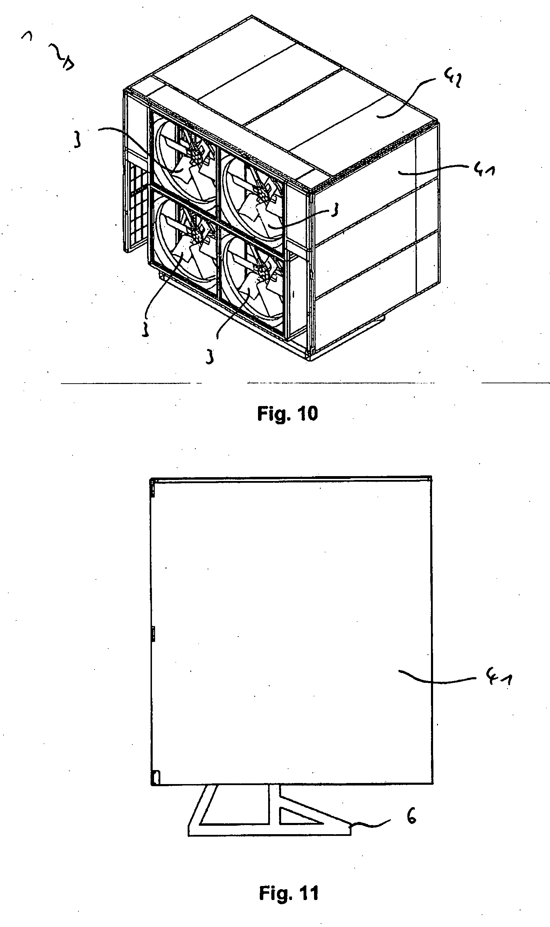

Fig. 9 zeigt eine schematische Darstellung der Wind- und Strahlungsenergie-Kollektor-Anlage aus Fig. 8 von vorne gesehen in den Windkanal 31 auf die Windräder. Fig. 10 zeigt die Anlage 1 von schräg oben und Fig. 11 von der Seite gesehen.

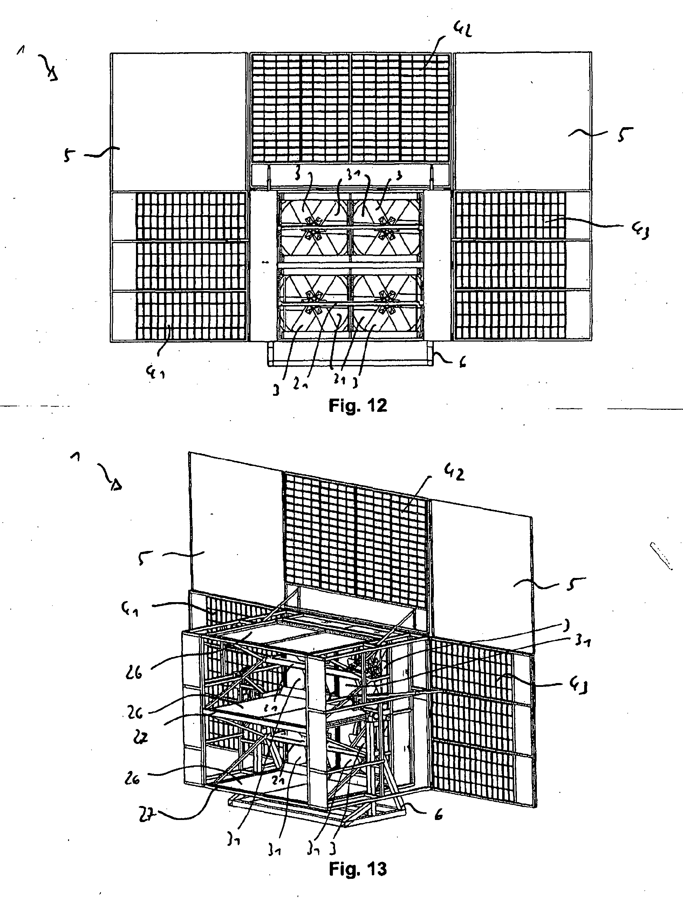

Die Fig. 12 und 13 zeigen die Wind- und Strahlungsenergie-Kollektor-Anlage 1 aus Fig. 8 mit zur Windleitung ausgeklappten Solarpaneelen 41, 42 und 43 und weiter zusätzlich ausgeklappten Hilfsflächen 5.

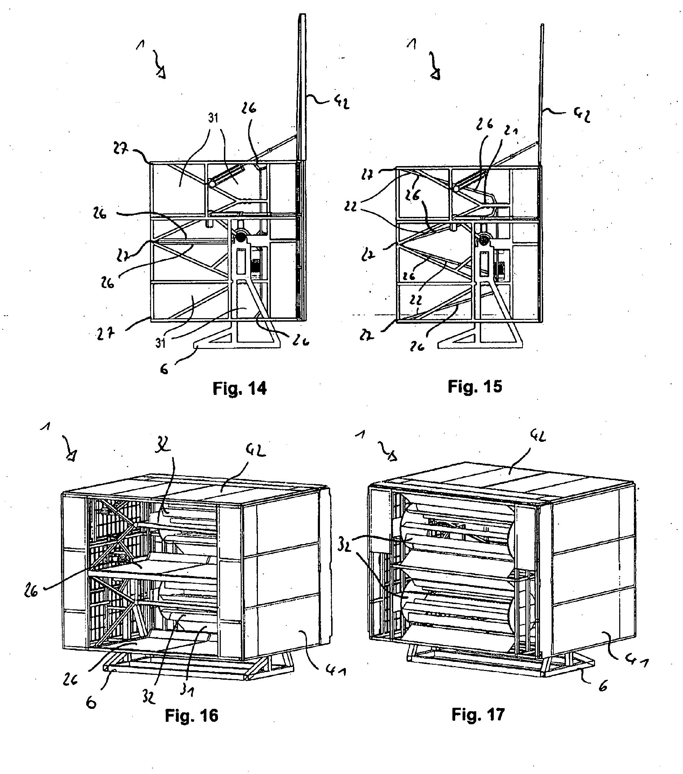

In den Fig. 14 und 15 ist im Vergleich gut der unterschiedliche Betriebszustand des Reflektorkörpers durch hin- und weggeschwenkte Teilflächen in geöffneter Seitenansicht ersichtlich. In Fig. 14 ist die Betriebsart Windenergie-Kollektor mit weggeklappten Reflektor-Teilflächen 26 zur Bildung des Windkanals 31 zu sehen, in Fig. 15 ist mit herein geschwenkten Reflektor-Teilflächen 26 bei Bildung des Reflektorkörpers 22 die Betriebsart Strahlungsenergie-Kollektor gezeigt.

Die Fig. 16 und 17 zeigen in einer Ansicht von schräg vorne und hinten eine Variante der Wind- und Strahlungsenergie-Kollektor-Anlage 1, bei der die Windräder durch Windwalzen 32 ausgebildet sind, die an den Seiten gelagert sind.

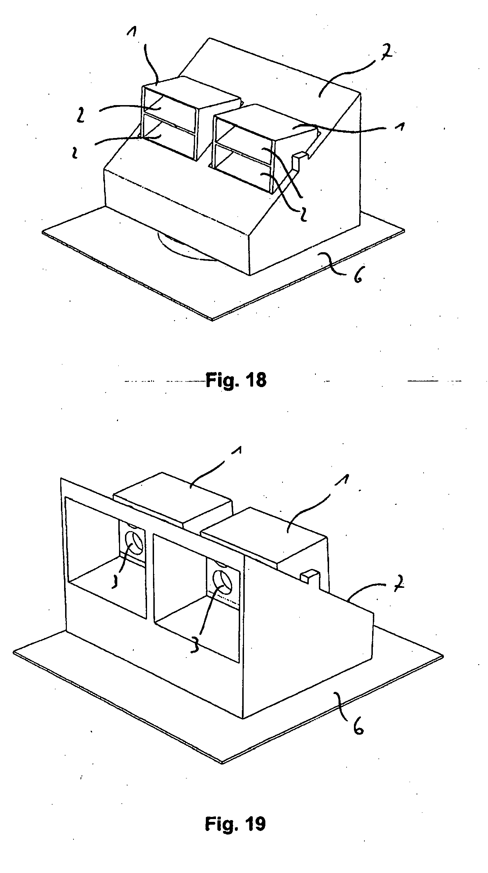

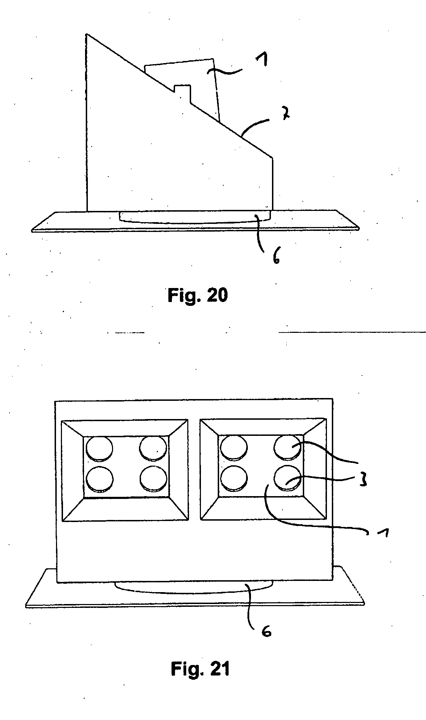

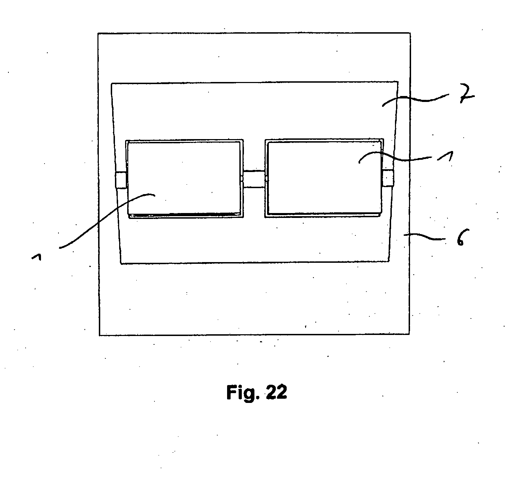

Die Fig. 18 bis 22 zeigen in unterschiedlichen Anrichten eine schematische Darstellung einer erfindungsgemäßen Wind- und Strahlungsenergie-Kollektor-Anlage 1 integriert in einer um die senkrechte Achse drehbaren Schrägfläche 7. In gezeigten Beispiel ist diese um ihre Achse verdrehbar ausgestaltet. Die Baugruppe der Wind- und Strahlungsenergie-Kollektor-Anlage 1 kann in der Schrägfläche 7 um die horizontale Achse verschwenkt werden. Zur Windenergie-Kollektor-Betriebsart wird die Seite mit den Windrädern 3 gegen den Wind gerichtet (Fig. 17).

Auf der Schrägfläche 7 können auch noch weitere Solarpaneele angebracht sein, so dass die Fläche optimal genutzt wird.

Die Wind- und Strahlungsenergie-Kollektor-Anlage kann einzeln oder auch in der zusammengefassten parallelisierten Form zur Montage auf einem Wagen, einem Container oder auf einem Hausdach vorgesehen sein.

### Bezugszeichenliste

- 1: Wind- und Strahlungsenergie-Kollektor-Anlage

- 2: Strahlungsenergie-Kollektor

- 21: Absorber
- 22: Reflektorkörper
- 23: Oberfläche
- 24: Hohlraum
- 25: Grund
- 26: Teilflächen
- 27: Anfangsbereich

- 3: Windrad

- 31: Windkanal
- 32: Windwalze

- 41: Solarpaneel
- 42: Solarpaneel
- 43: Solarpaneel
- 44: rückwärtige Fläche

- 5: Hilfsfläche
- 6: Gestell
- 7: Schrägfläche

## Patentansprüche

1. Wind- und Strahlungsenergie-Kollektor-Anlage (1),
bei der wenigstens ein Strahlungsenergie-Kollektor (2) mit einem Strahlung absorbierenden Absorber (21) und einem Reflektorkörper (22) vorgesehen ist, welcher Strahlung sammelt und auf den Absorber (21) richtet,
wobei wenigstens ein der Empfangsrichtung des Strahlungsenergie-Kollektors (2) entgegengesetzt angeordnetes an der Anlage gelagertes Windrad (3) vorgesehen ist,
wobei die Anordnung (2 und 3) aus Strahlungsenergie-Kollektor (2) und Windrad (3) beweglich unterstützt (6) ist,
sodass die Anordnung (2 und 3) entweder mit dem Strahlungsenergie-Kollektor (2) gegen die Sonne oder mit dem Windrad (3) gegen die vorherrschende Windrichtung ausgerichtet werden kann,
**dadurch gekennzeichnet,**
**dass** der Reflektorkörper (22) durch einzeln verschwenk- und/oder verschiebbare Teilflächen (26) gebildet ist, die am Anfangsbereich (27) des Reflektorkörpers (22) angelenkt sind, wodurch die zum Grund (25) des Strahlungsenergie-Kollektors (2) hinweisenden Enden der Teilflächen (26) nach außen geschwenkt und/oder verschoben werden können, wodurch ein Windkanal (31) im Anschluss an das Windrad (3) gebildet wird.

2. Wind- und Strahlungsenergie-Kollektor-Anlage nach Anspruch 1,
**dadurch gekennzeichnet,**
**dass** die Teilflächen (26) des Reflektorkörpers (22) so nach Innen in den Raum des Windkanals (31) geschwenkt werden können, dass der Reflektorkörper (22) einen sich verjüngenden an seiner Oberfläche (23) die Strahlung reflektierenden Hohlraum (24) bildet wobei an dessen sich verengend zulaufendem Grund (25) der Absorber (21) angeordnet ist.

3. Wind- und Strahlungsenergie-Kollektor-Anlage nach einem der Ansprüche 1 bis 2,
**dadurch gekennzeichnet,**
**dass** mehrere Anordnungen (2 und 3) aus hintereinander angeordneten Windrädern (3) und Kollektoren (2) mit Reflektorkörpern (22) und Absorbern (21) nebeneinander parallel angeordnet sind.

4. Wind- und Strahlungsenergie-Kollektor-Anlage nach einem der vorhergehenden Ansprüche,
**dadurch gekennzeichnet,**
**dass** zur Unterstützung der Anordnung/en (2 und 3) ein Gestell (6) vorgesehen ist an welchem die Anordnung (1) beweglich und insbesondere um die Senkrechte drehbar und um eine horizontale Kippachse verkippbar aufgehängt ist.

5. Wind- und Strahlungsenergie-Kollektor-Anlage nach einem der vorhergehenden Ansprüche,
**dadurch gekennzeichnet,**
**dass** seitlich angelenkte Solarpaneele (41, 42, 43) vorgesehen sind, deren rückwärtige Flächen (44) auch so eingestellt werden können dass diese den Wind auf das/die Windrad/räder (3) lenken.

6. Wind- und Strahlungsenergie-Kollektor-Anlage nach einem der vorhergehenden Ansprüche,
**dadurch gekennzeichnet,**
**dass** das/die Windrad/räder durch eine oder mehrere Windwalzen (32) ausgebildet sind.

## Claims

1. A wind and radiant-energy collector plant (1), in which at least one radiant-energy collector (2) is provided with a radiation-absorbing absorber (21) and a reflector body (22), which collects radiation and directs the same onto the absorber (21),
wherein at least one wind turbine (3) is provided, which is mounted on the plant arranged oppositely to the receiving direction of the radiant-energy collector (2),
wherein the arrangement (2 and 3) made up of radiant-energy collector (2) and wind turbine (3) is movably supported (6), so that the arrangement (2 and 3) can either be aligned with the radiant-energy collector (2) towards the sun or with the wind turbine (3) towards the prevailing wind direction,
**characterised in**
**that** the reflector body (22) is formed by individually pivotable and/or displaceable part surfaces (26), which are linked to the initial area (27) of the reflector body (22), as a result of which the ends of the part surfaces (26) pointing towards the base (25) of the radiant-energy collector (2) can be pivoted and/or displaced outwards, as a result of which a wind tunnel (31) is formed adjacently to the wind turbine (3).

2. The wind and radiant-energy collector plant according to claim 1,
**characterised in**
**that** the part surfaces (26) of the reflector body (22) can be pivoted inwards into the space of the wind tunnel (31) so that the reflector body (22) forms a tapering cavity (24), which reflects the radiation on the surface (23) thereof, wherein the absorber (21) is arranged at the narrowing base (25) thereof.

3. The wind and radiant-energy collector plant according to one of claims 1 to 2,
**characterised in**
**that** a plurality of arrangements (2 and 3) made up of wind turbines (3) and collectors (2) arranged one behind the other with reflector bodies (22) and absorbers (21) are arranged in parallel next to one another.

4. The wind and radiant-energy collector plant according to one of the preceding claims,
**characterised in**
**that** a framework (6) is provided for supporting the arrangement(s) (2 and 3), on which the arrangement (1) is suspended movably and in particular in a rotatable manner about the vertical and in a tiltable manner about a horizontal tilting axis.

5. The wind and radiant-energy collector plant according to one of the preceding claims,
**characterised in**
**that** laterally linked solar panels (41, 42, 43) are provided, the rear surfaces (44) of which can also be adjusted such that the same deflect the wind onto the wind turbine(s) (3).

6. The wind and radiant-energy collector plant according to one of the preceding claims,
**characterised in**
**in that** the wind turbine (s) are formed by one or a plurality of wind drums (32).

## Revendications

1. Installation collectrice d'énergie éolienne et radiante (1), dans laquelle est prévu au moins un collecteur d'énergie radiante (2) comportant un absorbeur (21) absorbant le rayonnement et un corps réflecteur (22) qui collecte le rayonnement et le dirige vers l'absorbeur (21),
dans laquelle est prévue au moins une éolienne (3) disposée à l'opposé du sens de réception du collecteur d'énergie radiante (2) et s'appuyant au niveau de l'installation,
le dispositif (2 et 3) composé du collecteur d'énergie radiante (2) et de l'éolienne (3) est assisté au niveau mouvement (6) et
de manière à ce que le dispositif (2 et 3) puisse être dirigé soit avec le collecteur d'énergie radiante (2) vers le soleil soit avec l'éolienne (3) vers le sens du vent prédominant,
**caractérisée en ce**
**que** le corps réflecteur (22) est constitué de sous-surfaces (26) individuellement pivotables et/ou déplaçables qui s'articulent au début (27) du corps réflecteur (22), les extrémités tournées vers la base (25) du collecteur d'énergie radiante (2) des sous-surfaces (26) pouvant être pivotées et/ou déplacées vers l'extérieur, ce qui forme un canal à vent (31) consécutif à l'éolienne (3).

2. Installation collectrice d'énergie éolienne et radiante selon la revendication 1,
**caractérisée en ce**
**que** les sous-surfaces (26) du corps réflecteur (22) peuvent être pivotées vers l'intérieur dans l'espace du canal à vent (31) de manière à ce que le corps réflecteur (22) forme une cavité (24) réfléchissant le rayonnement et se rétrécissant au niveau de sa surface (23), l'absorbeur (21) étant disposé à sa base (25) convergeant en se rétrécissant.

3. Installation collectrice d'énergie éolienne et radiante selon une des revendications 1 à 2,
**caractérisée en ce**
**que** plusieurs dispositifs (2 et 3) composés d'éoliennes (3) et de collecteurs (2) disposés les uns derrière les autres et équipés de corps réflecteurs (22) et d'absorbeurs (21) sont disposés parallèlement les uns aux autres.

4. Installation collectrice d'énergie éolienne et radiante selon une des revendications précédentes,
**caractérisée en ce**
**que**, pour soutenir l'installation ou les installations (2 et 3), il est prévu un châssis (6) auquel le dispositif (1) est accroché de manière mobile et en particulier de manière à pouvoir tourner autour de la verticale et autour d'un axe de basculement horizontal.

5. Installation collectrice d'énergie éolienne et radiante selon une des revendications précédentes,
**caractérisée en ce**
**qu'**il est prévu des panneaux solaires (41, 42, 43) articulés latéralement dont les surfaces arrière (44) peuvent aussi être réglées de manière à orienter le vent sur la ou les éoliennes (3).

6. Installation collectrice d'énergie éolienne et radiante selon une des revendications précédentes,
**caractérisée en ce**
**que** la ou les éoliennes sont constituées par un ou plusieurs rouleaux à vent (32).
